# EUROPEAN PATENT APPLICATION

(11) **EP 4 554 008 A1**
(43) Date of publication of application: **14.05.2025**
(21) Application number: 23208657.9
(22) Date of filing: 08.11.2023
(51) Int. Cl.: H01R 4/34, H01R 11/01, H01R 13/6592, H01R 13/533, H01R 4/30, H01R 9/05, H01R 11/05

(54) **AN ELECTRICAL CONNECTOR**

(71) Applicant: Hamilton Sundstrand Corporation, Charlotte, NC 28217 (US)
(72) Inventor: ETCHELLS, Paul, Birmingham (GB)
(74) Representative: Dehns

(57) **Abstract**

An electrical connector for an aircraft power system, the electrical connector comprising: a first electrical contact; a second electrical contact; a housing; and a fixing element, the fixing element extending through the first electrical contact and the second electrical contact to connect the first electrical contact to the second electrical contact, wherein the housing surrounds the first electrical contact and the second electrical contact, the housing comprising electrical insulation to electrically insulate the first and second electrical contacts from an exterior of the housing.

## Description

### Technical Field

This disclosure relates to an electrical connector for an aircraft power system, a kit of parts for an electrical connector, an aircraft and an electrical terminal.

### Background

Electrical connectors used on aircraft must be designed to withstand the conditions experienced during flight, including factors such as high vibrations, a large shock load and extreme fluctuating temperatures. Newly developed aircraft components requiring the use of these connectors also demand compatibility with far higher voltages than those needed in the past. This means current electrical connectors are often formed of large heavy terminal boxes. However, it is generally advantageous for all the weight and size of all components used on an aircraft to be minimised, and for the electrical connectors to remain accessible, for example to easily permit required maintenance.

### Summary

According to a first aspect, there is provided an electrical connector for an aircraft power system, the electrical connector comprising: a first electrical contact; a second electrical contact; a housing; and a fixing element, the fixing element extending through the first electrical contact and the second electrical contact to connect the first electrical contact to the second electrical contact, wherein the housing surrounds the first electrical contact and the second electrical contact, the housing comprising electrical insulation to electrically insulate the first and second electrical contacts from an exterior of the housing.

This configuration helps to ensure the first electrical contact and second electrical contact remain connected during use of the electrical connector, despite the extreme conditions experienced during flight. The configuration also allows the electrical connector to be operable with high voltages whilst remaining more lightweight and compact than the alternatives needed for said high voltages.

The second electrical contact may be configured to receive an electrical wire, such that the first electrical contact and the electrical wire are electrically connected when the electrical wire is inserted into the second electrical contact.

The second electrical contact may comprise a cavity, the first electrical contact disposed in the cavity to connect the first electrical contact to the second electrical contact.

The first electrical contact may be coated in a powder insulation layer.

The fixing element may be a screw.

Two or more fixing elements may extend through the first electrical contact and second electrical contact.

The electrical connector may further comprise a thread locking component, the thread locking component configured to prevent rotation of the fixing element.

This provides a secondary locking mechanism to reduce the risk of the fixing elements separating from the electrical contacts whilst the electrical connector is in use.

The electrical insulation may comprise an insulative layer of the housing.

The insulative layer may comprise a ceramic material.

The electrical connector may further comprise a shielding component, the shielding component configured to shield the electrical connector from an exterior of the shielding component.

This prevents electromagnetic signals originating from the electrical connector impacting other devices positioned close to the electrical connector when installed on a vehicle, for example an aircraft.

The shielding component may comprise a cable shield, the cable shield surrounding the electrical wire.

The cable shield may be a conducting braid.

The shielding component may further comprise a shielding layer, the shielding layer forming part of the housing such that the housing provides shielding.

The shielding layer may be formed of aluminium.

A portion of the shielding layer may be exposed to electrically contact the cable shield to the shielding layer.

The electrical connector may further comprise a clamp band, the clamp band configured to hold the cable shield against a surface of the housing.

The electrical connector may further comprise a heatshrink layer, the heatshrink layer surrounding the housing and shielding component.

The housing may comprise a cover and an opening, the opening configured to permit access to the fixing element, the cover configured to close the opening.

The cover may be a bung.

The bung may comprise a conducting filling and insulative body.

The conductive filling may form part of the shielding layer, and the insulative body may form part of the electrical insulation.

The conductive filling may be formed of aluminium and the insulative body may be formed of silicon.

According to a second aspect, there is provided a kit of parts for an electrical connector according to the first aspect.

According to a third aspect, there is provided an aircraft comprising an aircraft power system, the aircraft power system comprising an electrical connector according to the first aspect.

According to a fourth aspect, there is provided an electrical terminal for an aircraft, the electrical terminal comprising: a first electrical contact; a housing; and a fixing element, wherein the fixing element is insertable into the first electrical contact to connect the first electrical contact to a second electrical contact, wherein the housing surrounds the first electrical contact and the second electrical contact when the first electrical contact and second electrical contact are connected to each other, the housing comprising electrical insulation to electrically insulate the first and second electrical contacts from an exterior of the housing.

### Brief Description of the Drawings

Various examples will now be described, by way of example only, and with reference to the accompanying drawings, in which:
Fig. 1 shows a cross sectional view of an electrical connector for an aircraft; and

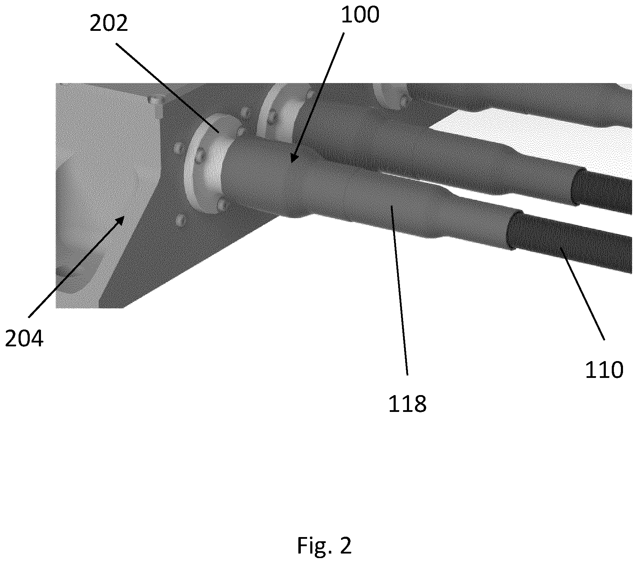

Fig. 2 shows a perspective view of the electrical connector in Fig. 1.

### Detailed Description

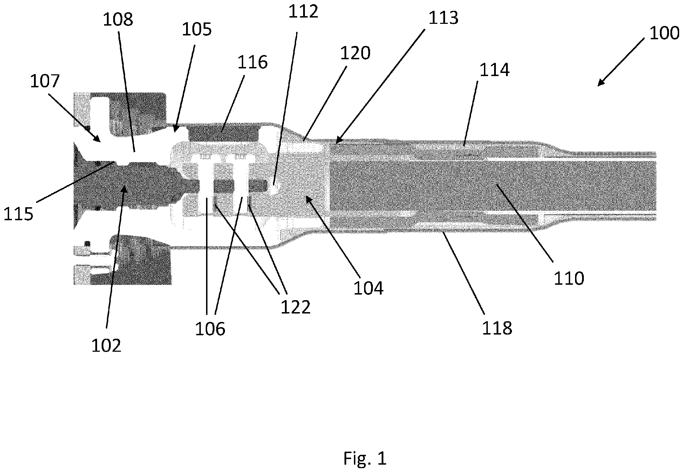

Referring to Fig. 1, an electrical connector 100 for an aircraft is shown. The electrical connector 100 comprises a first electrical contact 102, a second electrical contact 104, a housing 105, a first fixing element 106a and a second fixing element 106b.

In this embodiment, the first electrical contact 102 is formed of a flat pin, wherein a surface of the flat pin comprises primary cut outs, the primary cut outs configured to receive the fixing elements 106. The first electrical contact 102 may be coated in a powder insulation layer, wherein the powder insulation layer comprises intervals, the intervals configured to allow the first electrical contact 102 to form electrical connections with the fixing elements 106a 106b and/or the second electrical contact 104 (e.g. with the intervals being portions where the powder insulation does not entirely cover the first electrical contact 102 such that an internal conductive portion of the first electrical contact 102 is exposed).

The second electrical contact 104 is formed of a ring terminal, wherein the ring terminal comprises secondary cut outs, the secondary cut outs configured to receive the fixing elements 106. The second electrical contact 104 comprises a cavity 112, wherein the cavity 112 is configured to receive the first electrical contact 102. The first electrical contact 102 is disposed in the cavity 112 to connect the first electrical contact 102 to the second electrical contact 104. This means a plurality of surfaces of the first electrical contact 102 may be in direct contact with the second electrical component 104 when the first electrical contact 102 and second electrical contact 104 are connected. In this embodiment, the cavity 112 is formed between two protruding portions, the second electrical contact 104 comprising the protruding portions. The protruding portions extend outwards from a centre of the ring terminal. The protruding portions extend in parallel to each other. The secondary cut outs are positioned on the protruding portions such that the fixing elements 106a 106b pass through both protruding portions when inserted. The first electrical contact 102 can be inserted in between the two protruding portions, such that the fixing elements 106a 106b pass through both protruding portions and the first electrical contact 102 when the fixing elements 106a 106b are inserted into the electrical connector 100.

The first fixing element 106a and second fixing element 106b extend through the first electrical contact 102 and the second electrical contact 104 to connect the first electrical contact 102 and the second electrical contact 104. When the first electrical contact 102 and second electrical contact 104 are connected, they are electrically coupled. In this embodiment, the fixing elements 106a 106b are screws. The electrical connector 100 further comprises a thread locking component 122, wherein the thread locking component 122 is configured to prevent rotation of the fixing elements 106a 106b. In this embodiment, the thread locking components 122 are positioned on the second electrical contact 104, such that the first fixing element 106a and second fixing element 106b are fixed to the second electrical contact 104. In some embodiments, the thread locking component 122 may be an adhesive, such as a methacrylate-based fluid.

The second electrical contact 104 is configured to receive an electrical wire 110, such that the first electrical contact 102 and the electrical wire 110 are electrically connected when the electrical wire 110 is inserted into the second electrical contact 104. In some embodiments, crimping may be used to fix the electrical wire 110 to the second electrical contact 104. The process of crimping comprises compressing a receiving portion of the second electrical contact 104, wherein the receiving portion contains the electrical wire 110, such that an inner surface of the second electrical contact 104 presses against the electrical wire 110. The electrical wire 110 therefore becomes electrically coupled with the second electrical connector 104 and the electrical wire 110 is held in place by the inner surface of the second electrical contact 104.

The housing 105 surrounds the first electrical contact 102 and second electrical contact 104. The housing 105 comprises electrical insulation 107 to electrically insulate the first electrical contact 102 and second electrical contact 104 from an exterior of the housing 105. The electrical insulation 107 comprises an insulative layer 108 of the housing 105. In this embodiment, the insulative layer 108 comprises a ceramic material.

The housing 105 further comprises a cover 116 and an opening, wherein the opening is configured to permit access to the fixing elements 106. The cover 116 is configured to close the opening. This means the fixing elements 106a 106b can be inserted or removed from the electrical contacts 102 104 if the cover 116 is removed, for example if maintenance is required.

The electrical connector 100 further comprises a shielding component 113. The shielding component 113 is configured to shield the electrical connector 100 from an exterior of the shielding component 113. This is achieved as the shielding component 113 is formed of electrically conductive materials connected to an electrical earthing point, therefore producing a conducting grounded shell around elements in an interior of the shielding component 113. The shielding component 113 therefore prevents electromagnetic fields originating from the interior of the shielding component 113 reaching the exterior of the shielding component 113. The shielding component 113 therefore also prevents electromagnetic signals from the exterior of the shielding component 113 from reaching the interior of the shielding component 113. These effects are beneficial as other components likely to be found near to the electrical connector 100 on an aircraft may be affected by external electromagnetic signals.

The shielding component 113 comprises a cable shield 114, the cable shield 114 surrounding the electrical wire 110. In this embodiment, the cable shield 114 comprises a conductive braid, wherein the conductive braid is wrapped around a surface of the electrical wire. The conductive braid runs along a length of the electrical wire 110 to reach an earthing point.

The shielding component 113 further comprises a shielding layer 115, wherein the shielding layer 115 forms part of the housing 105, such that the housing 105 provides shielding. In this embodiment, the shielding layer 115 is attached to the insulative layer 108, such that it surrounds a portion of the electrical connector 100. In some embodiments, the insulative layer 108 may be formed on a surface of the shielding layer 115. The shielding layer 115 may provide structure to housing 105. The shielding layer may provide structure to the insulative layer 108. A portion of the shielding layer 115 is exposed to electrically contact the cable shield 114. This permits electrical connection between the shielding layer 115 and the cable shield 114. This ensures the shielding component 113 is able to shield across the full length of the electrical connector, as the shielding effect is only achieved when a continuous conductive shell is formed. In this embodiment, the shielding layer 115 is formed of a layer of aluminium, wherein the layer of aluminium is positioned on an inner surface of the insulative layer 108.

In this embodiment, the cover 116 is a bung 116. The bung 116 comprises a conductive filling and an insulative body. The bung 116 is positioned such that the conductive filling forms part of the shielding component 113, as the conductive filling is in electrical contact with the shielding layer 115. The conductive filling may be formed of aluminium. The insulative body forms parts of the electrical insulation 107. The insulative body may be formed of silicon.

The electrical connector 100 further comprises a clamp band 120. The clamp band 120 may be formed of a ring-shaped body, wherein the ring-shaped body surrounds a portion of the housing 105. The clamp band 120 is configured to hold the cable shield 114 against a surface of the housing 105. More specifically, the clamp band 120 is configured to hold the cable shield 114 against the exposed portion of the shielding layer 115 to ensure the cable shield 114 and shielding layer 115 remain in electrical contact.

The electrical connector 100 further comprises a heatshrink layer 118. The heatshrink layer 118 surrounds the housing 105 and shielding component 113, such that the heatshrink layer 118 forms an outer surface of a portion of the electrical connector 100. The heatshrink layer 118 comprises a heatshrink material, wherein the heatshrink material is configured to tighten when heat is applied. The heatshrink layer 118 therefore presses inward against the housing 105 and shielding component 113 when heated during the installation of the heatshrink layer 118 onto the electrical connector 100. This holds in place components of the electrical connector 100 which are positioned in an interior of the heatshrink layer 118, whilst also providing an additional barrier from an exterior environment of the heatshrink layer 118. In some embodiments, the heatshrink layer 118 may have an adhesive backing, such that the heatshrink layer 118 can be fixed to the other components of the electrical connector 100.a terminal box 204. In some embodiments, the anchor point 202 may also be attached to the housing 105.

In order to prepare the electrical connector for use, the housing 105 is first placed over the first electrical contact 102. The electrical wire 110 is inserted into the second electrical contact 104 and crimped, such that the second electrical contact 104 and the electrical wire 110 are connected. The first electrical connector 102 is then inserted into the cavity 112 of the second electrical connector 104, before the fixing elements 106a 106b are inserted through the first electrical contact 102 and second electrical contact 104. The fixing elements 106a 106b are inserted via the opening in the housing 105. This means the first electrical contact 102, the second electrical contact 104 and the electrical wire 110 are all electrically coupled. The cover 116 is then inserted into the opening of the housing 105.The cable shield 114 is wrapped around the electrical wire 110, before the clamp band 120 is used to clamp the cable shield 114 to the exposed portion of the shielding layer 115. The heatshrink layer 118 is then slid over the other components of the electrical connector 100 before being heated, such that the heatshrink layer 118 tightens and holds the components of the electrical connector 100 in place.

During use, the electrical connector 100 is configured to transfer power to/from the terminal box 204 from/to an electrical device, wherein the electrical device is electrically connected to the electrical wire 110. The electrical insulation 107 electrically insulates the electrical connector 100. The shielding component 113 provides shielding to the electrical connector 100.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. An electrical connector for an aircraft power system, the electrical connector comprising:
a first electrical contact;
a second electrical contact;
a housing; and
a fixing element, the fixing element extending through the first electrical contact and the second electrical contact to connect the first electrical contact to the second electrical contact,
wherein the housing surrounds the first electrical contact and the second electrical contact, the housing comprising electrical insulation to electrically insulate the first and second electrical contacts from an exterior of the housing.

2. The electrical connector of claim 1, wherein the second electrical contact is configured to receive an electrical wire, such that the first electrical contact and the electrical wire are electrically connected when the electrical wire is inserted into the second electrical contact.

3. The electrical connector of any preceding claim, wherein the second electrical contact comprises a cavity, the first electrical contact disposed in the cavity to connect the first electrical contact to the second electrical contact.

4. The electrical connector of any preceding claim, wherein the fixing element is a screw.

5. The electrical connector of any preceding claim, wherein the electrical connector further comprises a thread locking component, the thread locking component configured to prevent rotation of the fixing element.

6. The electrical connector of any preceding claim, wherein the housing comprises a cover and an opening, the opening configured to permit access to the fixing element, the cover configured to close the opening.

7. The electrical connector of any preceding claim, wherein the electrical insulation comprises an insulative layer of the housing.

8. The electrical connector of claim 7, wherein the insulative layer comprises a ceramic material.

9. The electrical connector of any preceding claim, wherein the electrical connector further comprises a shielding component, the shielding component configured to shield the electrical connector from an exterior of the shielding component.

10. The electrical connector of claim 9 when dependent on claim 2, wherein the shielding component comprises a cable shield, the cable shield surrounding the electrical wire.

11. The electrical connector of claim 9 or 10, wherein the shielding component further comprises a shielding layer, the shielding layer forming part of the housing such that the housing provides shielding.

12. The electrical connector of claim 11 when dependent on claim 10, wherein a portion of the shielding layer is exposed to electrically contact the cable shield to the shielding layer.

13. A kit of parts for an electrical connector according to any preceding claim.

14. An aircraft comprising an aircraft power system, the aircraft power system comprising an electric connector according to any of claims 1 to 12.

15. An electrical terminal for an aircraft, the electrical terminal comprising:
a first electrical contact;
a housing; and
a fixing element, wherein the fixing element is insertable into the first electrical contact to connect the first electrical contact to a second electrical contact,
wherein the housing surrounds the first electrical contact and the second electrical contact when the first electrical contact and second electrical contact are connected to each other, the housing comprising electrical insulation to electrically insulate the first and second electrical contacts from an exterior of the housing.
